# EUROPEAN PATENT SPECIFICATION

(11) **EP 3 941 887 B1**
(45) Date of publication and mention of the grant of the patent: **11.11.2026**
(21) Application number: 20713561.7
(22) Date of filing: 20.03.2020
(51) Int. Cl.: C04B 28/08, C04B 7/153, C04B 24/06

(54) **METHOD FOR THE MANUFACTURE OF HIGH-END PERFORMANCE STEEL SLAG-BASED BUILDING PRODUCTS**
VERFAHREN ZUR HERSTELLUNG VON AUF HOCHLEISTUNGSSTAHLSCHLACKE BASIERENDEN BAUPRODUKTEN
PROCÉDÉ POUR LA FABRICATION DE PRODUITS DE CONSTRUCTION À BASE DE SCORIES D'ACIER À HAUTE PERFORMANCE FINALE

(30) Priority: 21.03.2019 US 201962821603 P
(43) Date of publication of application: 26.01.2022
(73) Proprietor: Tata Steel IJmuiden B.V., 1951 JZ Velsen-Noord (NL)
(72) Inventor: KAJA, Anna Monika, 1970 CA Ijmuiden (NL); YU, Qingliang, 1970 CA Ijmuiden (NL)
(74) Representative: Group Intellectual Property Services
(86) International application number: PCT/EP2020/057718
(87) International publication number: WO 2020/188070

(56) References cited:
- JP-A- 2000 169 212
- KR-B1- 101 905 074
- US-A- 5 553 670
- DING YUNG-CHIN ET AL: "Study on the treatment of BOF slag to replace fine aggregate in concrete", CONSTRUCTION AND BUILDING MATERIALS, ELSEVIER, NETHERLANDS, vol. 146, 25 April 2017 (2017-04-25), pages 644 - 651, XP085032844, ISSN: 0950-0618, DOI: 10.1016/J.CONBUILDMAT.2017.04.164
- DOUCET ET AL: "Effective CO"2-specific sequestration capacity of steel slags and variability in their leaching behaviour in view of industrial mineral carbonation", MINERALS ENGINEERING, ELSEVIER, AMSTERDAM, NL, vol. 23, no. 3, 9 October 2009 (2009-10-09), pages 262 - 269, XP026896413, ISSN: 0892-6875, [retrieved on 20091009], DOI: 10.1016/J.MINENG.2009.09.006

## Description

The present invention relates generally to upgrading of steel slag, a steel making by-product, to an innovative binding material. By activating the converter slag minerals, the steel slag can be turned to a highly effective binder that can be used to produce various building products. More particularly the invention relates to a slag mixture for a building product comprising steel slag, water, and a chelating agent, as well as to a method for preparing a building product comprising steel slag. It further relates to a building product and a premix kit.

Basic Oxygen Furnace (BOF) steel slag (also called LD-Converter slag) is a by-product from Linz-Donawitz steel manufacture process. In Europe, the annual production of BOF slag is about 10.4 million tons. A large amount of steel slag is currently landfilled, about 23% of total mass of steel slag produced, causing environmental issues. The application of steel slag as a reactive binder in cement and concrete production has not been successful up to now. Industrially, steel slag is mainly utilized in road construction (~54% of a total steel slag amount in 2014 and ∼46% of a total steel slag amount in 2016). In concrete industry, steel slag is used as an aggregate (~7% of a total steel slag amount in 2014 and ~4% of a total steel slag amount in 2016). The observed decreasing tendencies in the steel slag application over the years in both industrial sections are caused by the expansion problems due to the existing free lime, and in consequence, more restricted regulations for the steel slag utilization.

The application of steel slag in cement and concrete industry is limited due to a number of technological barriers: low hydraulic activity (low amorphous content, high amounts of inert phases), volume instability problems (presence of free-CaO) and contamination with heavy metals (especially vanadium and chromium). Due to these technological barriers, steel slag cannot be used in high-end performance building product according to the state of the art.

Slag mixtures comprising steel making converter slag and a chelating agent such as triethanolamine, triispropanolamine phenol or oxalic acid are known from documents JP 2000169212 A and DING YUNG-CHIN ET AL: "Study on the treatment of BOF slag to replace fine aggregate in concrete", CONSTRUCTION AND BUILDING MATERIALS, ELSEVIER, NETHERLANDS, vol. 146, 25 April 2017, pages 644-651.

It is therefore desirable to modify the steel slag as such that it can be used in high-end performance building products, having high mechanical performance, low porosity and low environmental impact.

According to the invention there is provided a slag mixture for a building product comprising steel slag, water, and a chelating agent, wherein the chelating agent is potassium citrate, and wherein the chelating agent ranges between 0.01 and 9.7 wt.% by mass of steel slag, and having a liquid to solid ratio in the range of 0.10 - 0.35. A method for preparing a building product comprising steel slag, a building product comprising steel slag and a premix kit comprising steel slag are also provided. The invention makes use of a method to activate converter slag minerals, consequently generating a binding material that can be used as a highly effective binder to produce building products.

In the first aspect, there is provided a slag mixture for a building product comprising steel slag, water and a chelating agent, wherein the chelating agent is potassium citrate, and wherein the chelating agent ranges between 0.01 and 9.7 wt.% by mass of steel slag, and having a liquid to solid ratio in the range of 0.10 - 0.35.

The presence of chelating agent in the slag mixture, which acts as an activating agent as well as superplasticizer, results in a high reduction of water demand of the steel slag, and in turn a reduction of the amount of water needed in the steel slag paste. This causes high performance of the resulting product, such as high compressive strength and low porosity. It is believed that, through the activation of iron phases, this invention allows to upgrade the steel slag to a binding material which can be used for the production of high-end performance building products.

Based on the phase composition of the steel slag, a chelating agent was selected to activate iron containing phases and in the same time, to act as a superplasticizer to reduce the water demand of the steel slag. Excessive water would cause an increase in porosity and a decrease in compressive strength of the products. By making use of the chelating agent, the amount of water required to obtain paste with a good flowability is considerably reduced so initially a lower amount of water is needed, especially compared to the case where no superplasticizer is used.

The invention thus allows converter slag to be transformed into stone-like products with high performance, e.g. excellent compressive strength which can be potentially used to produce concrete pipes, pavements, structural elements. It is believed that the targeted phases to form a binder are C₂F (srebrodolskite /brownmillerite, dicalcium ferrite, in which iron can be substituted with aluminium, titanium and vanadium) and wuestite (FeO, MgO and MnO solid solution) and to a lesser extent C₂S (belite, dicalcium silicate, contaminated with vanadium). The slag mixture, due to activation of the steel slag with the chelating agent, will result in a paste that can be used as a building product directly or as a binder in a building product, by adding additions before curing.

It should be noted that throughout the specification, LD converter slag, BOF slag and steel slag are used interchangeably. In all cases it refers to a slag which is obtained as a by-product in the basic oxygen furnace, from a converter of a Linz-Donawitz steel manufacture process. Furthermore, the term slag mixture, and steel slag paste can be used interchangeably. It should be noted though that the slag mixture itself can be used as a building product or as a binder in a building product.

T chelating agent in the slag mixture ranges between 0.01 and 9.7 wt.% by mass of steel slag, preferably between 1.0% and 5.0 wt. % by mass of steel slag. In the absence of the chelating agent the heat evolution peak occurs within the first hour of hydration, resulting in a flash setting. Hence, without a chelating agent, the steel slag is not suitable to be used as a binder. Therefore the slag mixture comprises at least 0.01 wt. % of chelating agent, preferably at least 0.1 wt. %, more preferably at least 1 wt. % by mass of steel slag. The maximum of heat release is shifted to ~13 hours, if 1 wt. % of chelating agent is added. Further increase of the chelating agent dosage results in the shortening of the induction period, and thus shorter handling times. The slag mixture comprises at most 9.7 wt. % of chelating agent, preferably at most 5 wt. % of chelating agent, to ensure sufficient handling time to use the slag mixture. The slag mixture has a liquid to solid ratio in the range of 0.10 - 0.35, preferably in the range of 0.10 - 0.25, more preferably 0.12 - 0.20, most preferably 0.16.

The liquid to solid ratio of the slag mixture is at least 0.10, preferably at least 0.12. At a liquid to solid ratio below 0.10, the slag mixture will be dry, and therefore difficult to process. Hence the liquid to solid ratio is at least 0.10 to enable mixing and casting of the paste. Excessive water would cause an increase in porosity and decrease in compressive strength of the products. Therefore the liquid to solid ratio is at most 0.35,merepreferably at most 0.25, more preferably at most 0.20. Also to avoid bleeding and segregation the liquid to solid ratio should be below 0.35. It should be noted that the liquid to solid ratio is calculated with respect to the steel slag. Hence if any further additions such as sand are added, these additions are not regarded in the liquid to solid ratio. Hence, in this application, the I/s ratio could also be read as liquid to slag ratio.

In an embodiment according to the invention the steel slag in the slag mixture comprises 10 - 30% brownmillerite, 0 - 15 % magnetite, 25 - 60 % C₂S, 10 - 30 % Mg-Wuestite 0 - 20% C₃S, and 0 - 6 % free-CaO by mass. C₂S or belite and brownmillerite are commonly present in converter steel slag. Analyses of the solid phases of steel slag pastes showed that the chelating agent accelerates the hydration of belite and brownmillerite, thereby contributing to the compressive strength development of the resulting building product.

In an embodiment according to the invention the steel slag in the slag mixture comprises 35 - 60 % CaO, 10 - 17 % SiO₂, 15 - 35 %, ΣFe Oxides, 1 - 5 % Al₂O₃, 1 - 13 % MgO, 0 - 4 % P₂O₅ by mass. Steel slags obtained as a by-product from a basic oxygen furnace, a converter processes or from a Linz-Donawitz steel manufacture process, also known as converter steel slag will commonly fall in the above range. The BOF slag is typically composed of CaO (45- 60%), SiO₂ (10-15%), ΣFe Oxides (~ 30%, with Fe₂O₃ 3-9% and FeO 7-20%, Al₂O₃ (1-5%), MgO (3-13%) and P₂O₅ (1-4%), with the mineral composition represented by C₂S (dicalcium silicate), C₃S (tricalcium silicate), C₂F (srebrodolskite/brownmillerite, dicalcium ferrite), RO phase (CaO-FeO-MgO-MnO solid solution), C₄AF (tetracalcium aluminoferrite) and free CaO. As well known to a person skilled in the art the RO phase encompass both wuestite and CaO, and the C₂F phase may also encompass C₄AF.

In an embodiment according to the invention the chelating agent in the slag mixture is preferably tri-potassium citrate monohydrate.

The chelating agent according to the invention should activate iron containing phases and in the same time, act as a superplasticizer to reduce the water demand of the steel slag paste. The chelating agent may also accelerate the dissolution and/or hydration of belite (C₂S, dicalcium silicate)). Furthermore the pH of alkali salts of citric acid in solution is around 9, thereby providing safe working conditions for the workers.

In an embodiment according to the invention, the steel slag particle size in the slag mixture is at most 500 µm, preferably at most 106 µm. The steel slag particle size is preferably at most 500 µm in order to increase the exposure of the hydrating phases to the chelating agent, to reduce the reaction time and to improve the homogeneity of the product. Such steel slag particle size can be obtained by several methods as known by a person skilled in the art. For example by firstly milling the steel slag in a planetary ball mill (Pulverisette 5, Fritsch) and sieving below 500 µm, preferably 106 µm. A steel slag particle size of at most 500 µm, preferably of at most 106 µm also allows for a better dissolution of the CaO.

In an embodiment according to the invention, the steel slag median grain in the slag mixture is at most 30 µm, preferably at most 20 µm, more preferably at most 14 µm. The median grain size is preferably at most 30 µm in order to increase the exposure of the hydrating phases to the chelating agent, to reduce the reaction time and to improve the homogeneity of the product.

The particle size distribution of BOF slag may be measured by laser diffraction technique (Mastersizer2000, Malvern).

The slag mixture according to the invention can be made from steel slag, water and chelating agent alone, to prepare building products with excellent compressive strength, around 55 MPa or even up to 75 MPa. In this case the slag mixture typically has a liquid to solid ratio of at most 0.25. Alternatively the slag mixture may comprise additions such as sand, gravel and/or limestone, resulting in a mortar or concrete like mixture. This allows for a wider application of the steel slag in high end building products, thereby providing the potential to significantly reduce landfilled steel slag.

In a second aspect there is provided a method for preparing a building product comprising the steps of
a) providing a steel slag and,
b) optionally providing additions, such as sand, gravel and/or lime stone,
c) adding an aqueous solution of the chelating agent,
d) mixing the ingredients of step a - c to obtain the slag mixture according to the specification above,
e) applying the slag mixture in a mould,
f) curing the slag mixture to obtain the building product.

The method according to the invention as such can be used to produce high strength prefabricated building elements at ambient conditions. The steel slag is activated with a chelating agent and the water demand is reduced, thereby obtaining a high performance of the resulting product (e.g. high compressive strength, low porosity). The solid ingredients may be added in any order and are mixed with an aqueous solution of the chelating agent. By mixing, a homogeneous slag mixture or paste is obtained, which can be added to a mould. The method can be carried out at ambient conditions and no special curing conditions are required. Sufficient workability of the pastes is reflected in homogenous distribution of the phases in the hydrated, cured pastes as well as the low porosity of the final product.

Alternatively, there is provided a method for preparing a building product comprising the steps of
a) Providing a steel slag,
b) Optionally providing additions, such as sand, gravel and/or lime stone,
c) Providing a chelating agent,
d) Adding water,
e) Mixing the ingredients of step a - d to obtain the slag mixture according to the specification above,
f) applying the slag mixture in a mould,
g) curing the slag mixture to obtain the building product.

This method can be used to produce high strength prefabricated building elements at ambient conditions. The steel slag is activated with a chelating agent and the water demand is reduced, thereby obtaining a high performance of the resulting product (e.g. high compressive strength, low porosity). The solid ingredients may be added in any order, optionally premixed, and mixed with water. By mixing, a homogeneous slag mixture or paste is obtained, which can be transferred to a mould. The method can be carried out at ambient conditions and no special curing conditions are required. Sufficient workability of the pastes is reflected in homogenous distribution of the phases in the hydrated, cured pastes as well as the low porosity of the final product.

For both methods, the slag mixture is preferably setting in the mould within a desirable setting time, wherein the setting time ranges between 1 - 13 hours. The setting time is related to the amount of chelating agent and water added. The setting time is preferably at least 1 hour, to allow the worker to mould the slag mixture in its desired shape. The setting time is preferably at most 13 hours. After setting the product can be demoulded, thereby reducing the time in the mould. The curing typically continues after demoulding, and the mould can be used for the next building product.

In a fourth aspect there is provided a building product obtained from the slag mixture of the specification above, or by the methods in the specification above, having a compressive strength of at least 20 MPa, preferably at least 55 MPa.

The current invention is useful for turning currently landfilled or low grade applied steel slag into high end building product with high compressive strength. Additionally, in Europe, the annual production of BOF slag is about 10.4 million tons. No special investments are needed, steel slag - based building materials can be produced in the concrete making companies directly. As steel slag is currently landfilled, production costs are limited to the price of chelating agent and water. No additional equipment is required in comparison with standard paste/ concrete manufacture.

In an embodiment according to the invention, the building product has a mesoporous structure. The average pore diameter is preferably in the range of 2 to 50 nm, more preferably in the range of 2 to 20 nm. A mesoporous structure has the advantage that a higher homogeneity and a higher compressive strength can be obtained, as well as a high durability.

In an embodiment according to the invention, the leaching properties of the building products of vanadium and chromium are within the limits of the Dutch Soil Quality Degree (SQD limit values, V < 1.80 mg/kg; Cr < 0.63 mg/kg).

The leaching can be measured according to EN 12457-2 (one stage batch leaching test).

The cementitious phases (belite and brownmillerite) are also the most contaminated phases in the steel slag, implying the risk of heavy metal leaching during the hydration and service life of the steel slag pastes. As the heavy metals originated from brownmillerite and belite (mainly chromium and vanadium) are also present in the hydration products, the slag mixture according to the invention leads to immobilization and hence reduction of leaching of heavy metals.

In a fifth aspect, there is provided a premix kit for obtaining a building product comprising steel slag and a chelating wherein the chelating agent is potassium citrate, and wherein the chelating agent ranges between 0.01 and 9.7 wt. % by mass of steel slag.

The premix kit can be used to instantaneously prepare a high-end building product by adding water, and mixing and curing.

In an embodiment according to the invention the chelating agent in the premix kit ranges preferably between 1.0% and 5.0 wt. % by mass of steel slag. In the absence of the chelating agent the heat evolution peak occurs within the first hour of hydration, resulting in a flash setting. Hence, without a chelating agent, the steel slag is not suitable to be used as a binder. Therefore the premix kit preferably comprises at least 0.01 wt. % of chelating agent, more preferably at least 0.1 wt. %, most preferably at least 1 wt. %, with respect to the steel slag. The maximum of heat release is shifted to ~13 hours, if 1 wt. % of chelating agent is added. Further increase of the chelating agent dosage results in the shortening of the induction period, and thus shorter handling times. Preferably, the premix kit comprises at most 9.7 wt. % of chelating agent, more preferably at most 5 wt. % of chelating agent, to ensure sufficient handling time to use the slag mixture.

In an embodiment according to the invention the steel slag in the premix kit comprises 10 - 30% brownmillerite, 0 - 15 % magnetite, 25 - 60 % C₂S, 10 - 30 % Mg-Wuestite 0 - 20% C₃S, and 0 - 6 % free-CaO. C₂S or belite and brownmillerite are commonly present in converter steel slag. Analyses of the solid phases of steel slag pastes showed that the chelating agent accelerates the hydration of belite and brownmillerite, thereby contributing to the compressive strength development of the resulting building product.

In an embodiment according to the invention the steel slag in the premix kit comprises 35 - 60 % CaO, 10 - 17 % SiO₂, 15 - 35 %, ΣFe Oxides, 1 - 5 % Al₂O₃, 1 - 13 % MgO, 0 - 4 % P₂O₅. Steel slags obtained as a byproduct from a basic oxygen furnace, a converter processes or from a Linz-Donawitz steel manufacture process, also known as converter steel slag will commonly fall in the above range. The BOF slag is typically composed of CaO (45- 60%), SiO₂ (10-15%), ΣFe Oxides (~ 30%, with Fe₂O₃ 3-9% and FeO 7-20%, Al₂O₃ (1-5%), MgO (3-13%) and P₂O₅ (1-4%), with the mineral composition represented by C₂S (dicalcium silicate), C₃S (tricalcium silicate), C₂F (srebrodolskite/brownmillerite, dicalcium ferrite), RO phase (CaO-FeO-MgO-MnO solid solution), C₄AF (tetracalcium aluminoferrite) and free CaO. As well known to a person skilled in the art the RO phase encompass both wuestite and CaO, and the C₂F phase may also encompass C₄AF.

In an embodiment according to the invention the chelating agent in the premix kit is preferably tri-potassium citrate monohydrate.

The chelating agent according to the invention should activate iron containing phases and in the same time, act as a superplasticizer to reduce the water demand of the steel slag paste. The chelating agent may also accelerate the dissolution and/or hydration of belite (C₂S, dicalcium silicate)). Furthermore the pH of alkali salts of citric acid in solution is around 9, thereby providing safe working conditions for the workers.

In an embodiment according to the invention, the steel slag particle size in the premix kit is at most 500 µm, preferably at most 106 µm. The steel slag particle size is preferably at most 500 µm in order to increase the exposure of the hydrating phases to the chelating agent, to reduce the reaction time and to improve the homogeneity of the product. Such steel slag particle size can be obtained by several methods as known by a person skilled in the art. For example by firstly milling the steel slag in a planetary ball mill (Pulverisette 5, Fritsch) and sieving below 500 µm, preferably 106 µm. A steel slag particle size of at most 500 µm, preferably of at most 106 µm also allows for a better dissolution of the CaO.

In an embodiment according to the invention, the steel slag median grain in the premix kit is at most 30 µm, preferably at most 20 µm, more preferably at most 14 µm. The median grain size is preferably at most 30 µm in order to increase the exposure of the hydrating phases to the chelating agent, to reduce the reaction time and to improve the homogeneity of the product.

The particle size distribution of BOF slag may be measured by laser diffraction technique (Mastersizer2000, Malvern).

The invention is further explained by the non-limiting examples and Figures.
FIG. 1A shows a flow diagram of iron and steel making slags.
FIG. 1B shows a graphical description of one embodiment of the invention, wherein the chelating agent is tri-potassium citrate monohydrate.
FIG. 1C shows a particle size distribution of the steel slag of an embodiment.
FIGs. 2A-2B show Heat flow and cumulative heat evolution of steel slag pastes (slag mixture) with dosages of tri-potassium citrate varying from 0 to 3 wt. % by mass of the slag
FIG. 3 shows the heat flow curve of the sample C3 and the phase changes in the paste (slag mixture) during the first 24 hours curing (derived from in-situ XRD)
FIGs. 4A-4B. Show thermal analysis (TGA and DTG) of steel slag pastes with dosages of tri-potassium citrate varying from 0 to 3 wt. % after 7 and 28 days of hydration.
FIG. 5. Shows FTIR spectra of steel slag pastes after 28 days of hydration. Here, bands located at 1569 cm⁻¹ and 1390 cm⁻¹ are associated with the citrate groups.
FIG. 6 shows XRD data of hydrated samples (HA: hydroandradite, K: katoite B:brownmillerite, HA: hydrotalcite, P: portlandite).
FIG. 7 shows a representative BSE image of hydrated steel slag paste with tripotassium citrate dosage of 1 wt. %.
FIG. 8 shows a) Density plot of Ca and Si for hydration products, b) BSE image with pixels from density plot in highlighted purple.
FIG. 9 shows a) Density plot of Fe and Si for hydration products. Polygon selections of pixels tuned to correspond with BSE image in b) BSE image with selected pixels from density plot in highlighted orange for Fe-rich products and blue for products with low Fe content.
FIG. 10 shows compressive strength of the steel slag pastes with dosages of tripotassium citrate varying from 0 to 3 wt. % after 28 days curing.
FIGs. 11A-11B show pore size distribution and cumulative pore volume of steel slag pastes after 28 days of hydration.

Some examples are described herein, according to embodiments of the current invention. The elemental composition is determined by the XRF (fused beads method). The mineralogical composition of steel slag is analyzed by X-ray diffraction (D4 ENDEAVOR X-ray Diffractometer equipped with Co X-ray tube) with Corundum external standard method. Samples were scanned on a rotating stage (with a spinning speed of 30 rpm) using a step size of 0.02° and a time per step of 2 s for a 2θ range of 10-90°. Quantitative Rietveld refinement was performed with TOPAS Academic software v5.0.

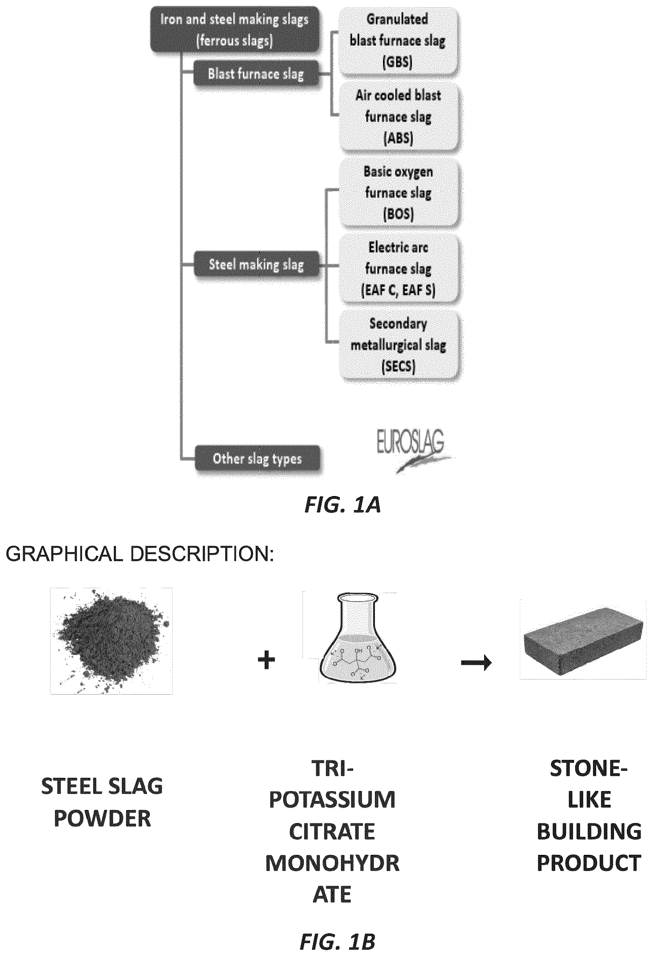

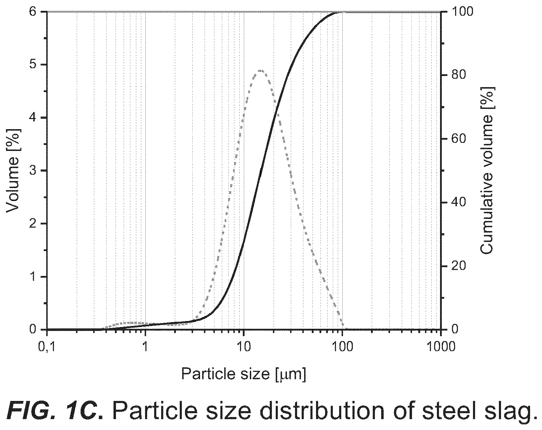

Steel slag, obtained from the basic oxygen furnace (FIG. 1A) is provided with a composition as given in Table 1. The converter slag is ground to a median grain size of about 14 micron (FIG. 1C) in order to increase the exposure of the hydrating phases. The particle size distribution of BOF slag after mechanical treatment is measured by laser diffraction technique (Mastersizer 2000, Malvern). The used chelating agent, in a dual role of activator and water reducer/superplasticizer, is tri-potassium citrate monohydrate (between 0.01 and 9.7 wt. % by mass of steel slag) in water solution, reducing water demand to 0.16 L/S, where L/S is liquid/solid mass ratio. The samples are described in this study based on the amount of potassium citrate added, C0, C1, C2, C3 for 0, 1, 2, 3 wt. % of potassium citrate dosage, respectively.

Steel slag pastes were prepared with an L/S (liquid/solid) ratio of 0.16, (except for the reference sample with an L/S ratio of 0.235). In the reference sample, water content was kept low to minimize differences in the initial water content between reference and activated samples, and in the same time, to enable sufficient mixing and casting of the paste. Prior to the mixing, three different concentrations of potassium citrate, between 0.01 and 9.7 wt. % of steel slag, were added to the water to ensure a homogenous dispersion. The aqueous solution of potassium citrate was added to the steel slag (see FIG.1B) and the resulting pastes were mixed for three minutes with 5 speeds kitchen mixer (30 s with a low speed, subsequently manually homogenized for another 30 s and then 120 s with a high speed).

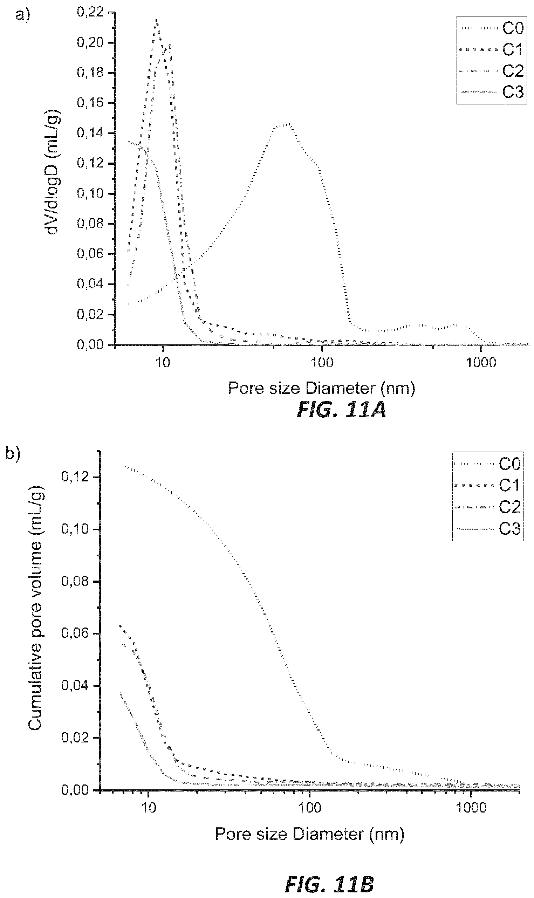

Flash setting is not observed for the inventive samples, and the setting of the paste occurs within 24 hours. The operation is carried out at ambient conditions and no special curing conditions are required. Sufficient workability of the pastes is reflected in homogenous distribution of the phases in hydrated pastes as well as their low porosity (FIG.11, Table 3).

The compressive strength of the pastes was determined on cubic samples (40×40×40 mm³). Pastes were covered with foil film and cured in the moulds for the first 24 hours (except from the reference sample which was cured in the mould 3 days to ensure sufficient hardening for the sample demoulding). Afterwards, the pastes were demoulded, covered with foil and cured in the climate chamber (20°C, RH>95%) until the testing age. The 28 days compressive strength was determined according to EN 196-1, in three replicates for each composition.

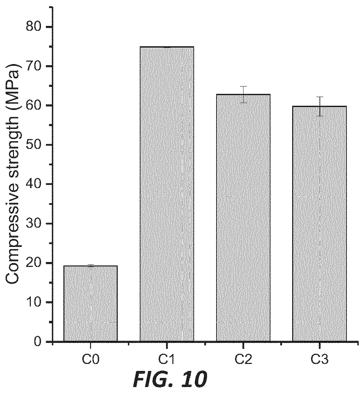

The resulting product with a 28-day compressive strength up to 75 MPa (FIG. 10) is acquired.

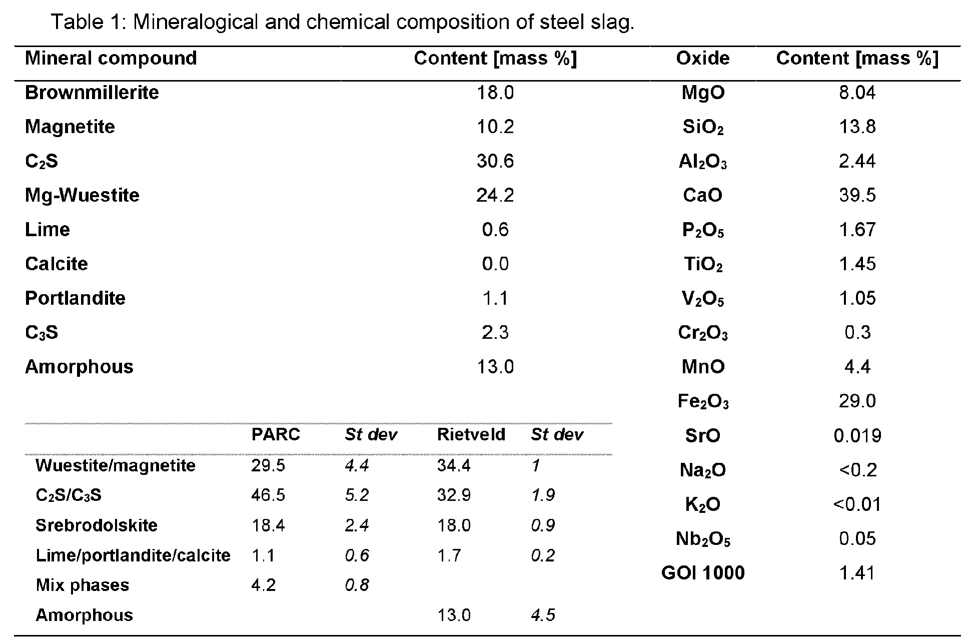

In order to analyse the hydration effect of the chelating agent, a hydration stoppage procedure was used. Turning now to hydration stoppage procedure for other characterization methods, the pastes were stored in plastic vials sealed with parafilm at 20 °C in the desiccator filled with water and with inserted sodium hydroxide pellets in order to minimize carbonation. After designed curing periods (7 and 28 days), the steel slag pastes were crushed in an agate mortar and hydration was stopped with double solvent exchange method (15 min in isopropanol, flushing with diethyl ether, 8 min drying at 40°C).

The likely reaction mechanisms were analysed with a variety of measurements.

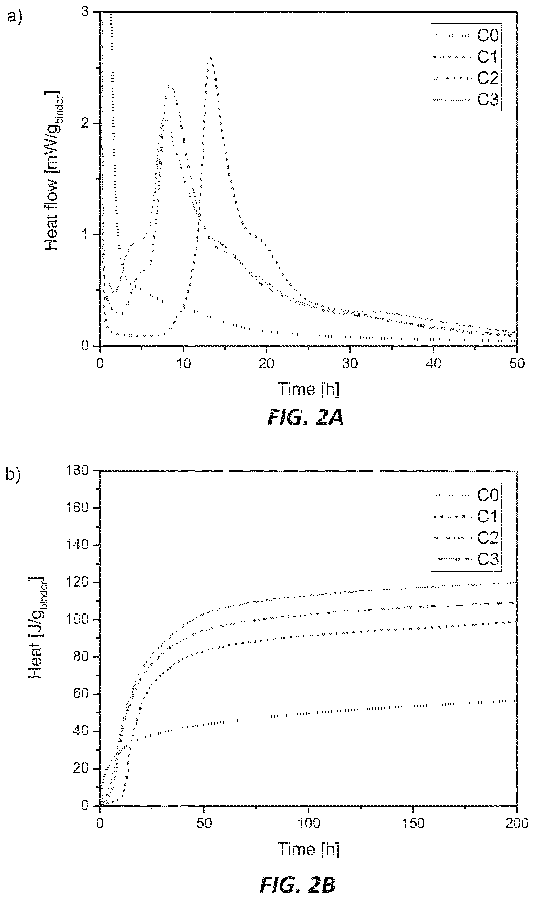

FIGs. 2A-2B show a heat flow and cumulative heat evolution of steel slag pastes with dosages of tri-potassium citrate varying from 0 to 3 wt. %. An isothermal conduction calorimeter (TAM Air, Thermometric) was used. In order to evaluate the cumulative heat, the integration of the heat flow curve was performed between 45 min and 140 hours.

It can be clearly derived from FIGs 2A and 2B that the inventive samples C1 - C3, result in a higher heat release than the reference sample C0 (C3:120 J/g steel slag vs C0:56 J/g steel slag).This indicates a strong influence of the applied activator on the reaction degree of BOF slag up to 7 days of hydration (curing).

Furthermore, it can be seen that the maximum of the heat release occurs after a few hours for the inventive samples, circumventing flash setting conditions.

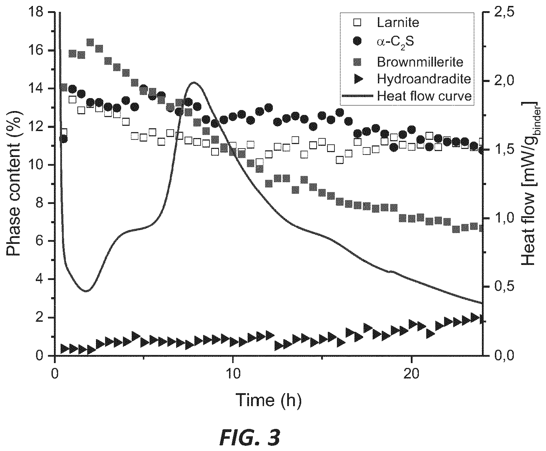

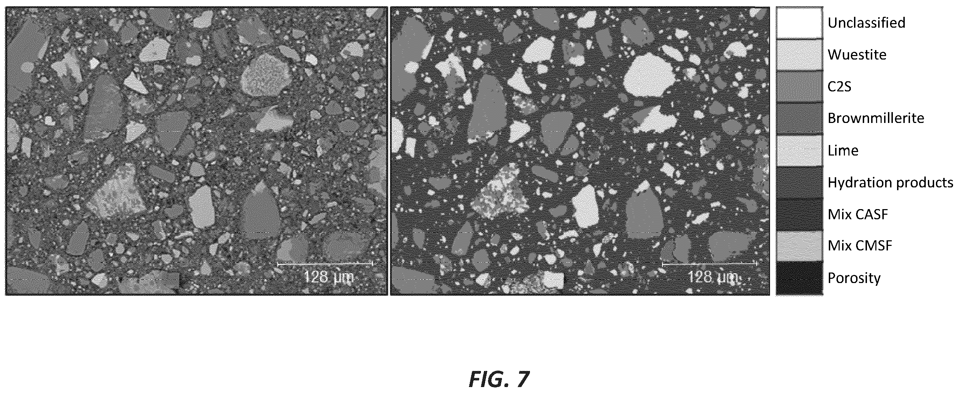

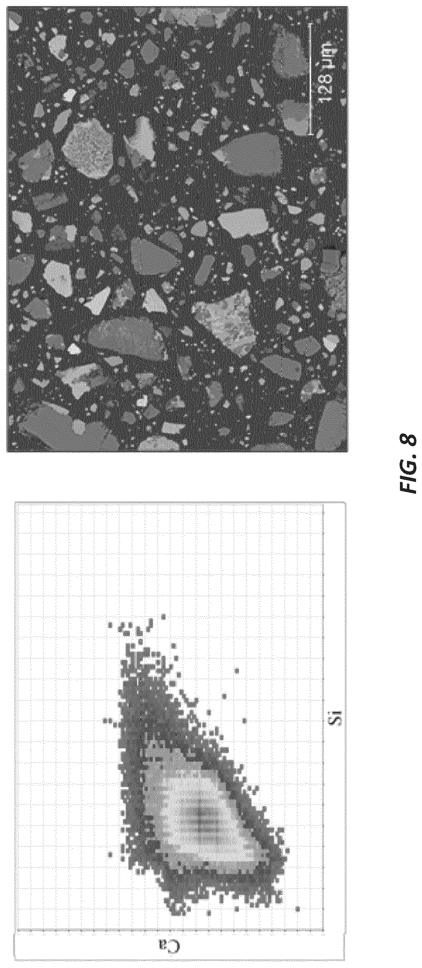

The addition of tri-potassium citrate monohydrate accelerates the dissolution of C₂F (FIG. 3), results in higher amounts of heat generated during the hydration (up to 7 days) in comparison with the reference sample (FIG. 2) and lowers the amount of unreacted phases after 7 and 28 days of hydration (Table 2). It is believed that the reaction of these phases is exothermic, therefore, a higher amount of heat generated suggests a higher reaction degree of the phases. The released heat can also further accelerate the reaction if the environment is adiabatic, however, in this case the amount of heat is not sufficiently high enough to be considered as significant. FIG 7, FIG 8 and FIG 9 show that a dense binder matrix is formed due to the reactivity of the steel slag, particularly through phases such as Wuestite, C₂S and C₂F.

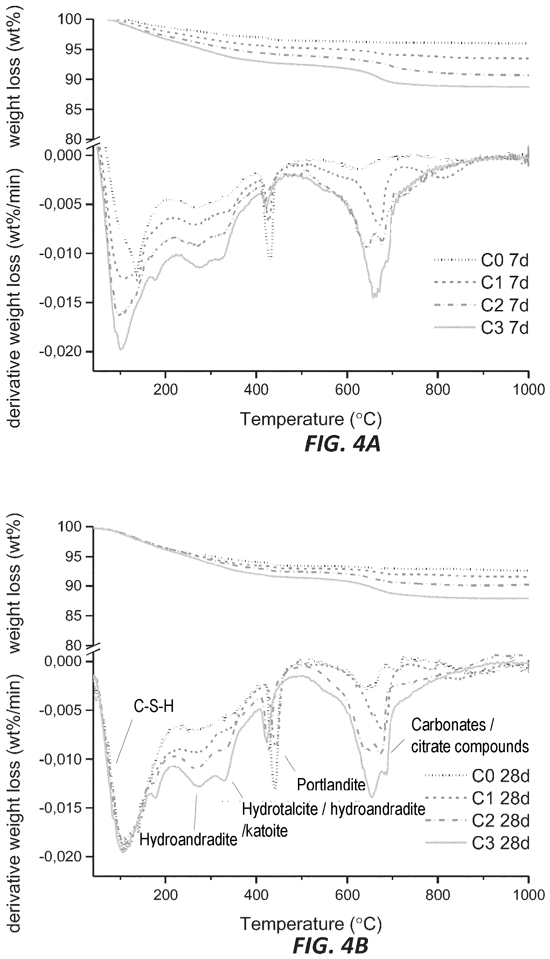

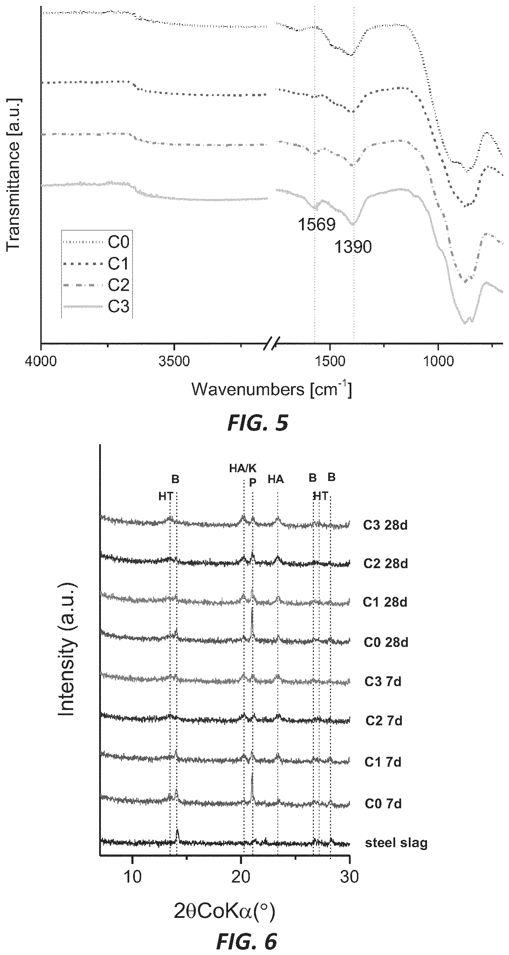

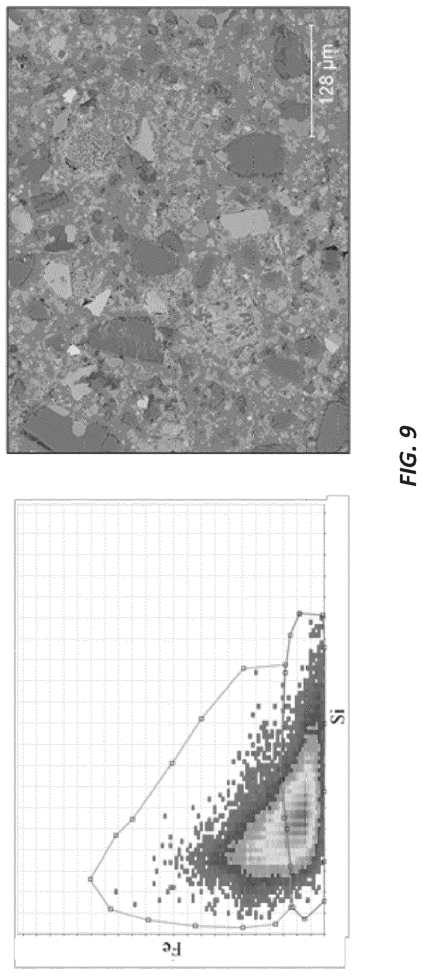

Wuestite also partially contributes to the formation of new phases (Table 2, FIG.9). The hydration of wuestite (iron-based phase with the magnesium contamination) is beneficial since the idea behind the hydration is that the reaction products provide better connection between the particles and fill the voids. The main hydration products of steel activation are hydroandradite / katoite and C-S-H gel (FIG. 4, FIG. 6). After water removal (via hydration stoppage procedure), citrate groups are still detectable in the reaction products (FIG. 5.) suggesting either its physical adsorption or chemical involvement among the phases.

**Table 2 Crystalline phase content of anhydrous BOF steel slag phases and hydroandradite, portlandite (reaction products) in the 28-days hydrated pastes, relative to the dry content in wt. % determined by XRD-Rietveld analysis.**

| **Phase** | **BOF** | **7 days** | | | | **28 days** | | | | ***St. dev.** |
|---|---|---|---|---|---|---|---|---|---|---|
| | | **C0** | **C1** | **C2** | **C3** | **C0** | **C1** | **C2** | **C3** | |
| **Mg-Wuestite** | 24.2 | 20.1 | 19.8 | 16.5 | 12.7 | 13.5 | 14.6 | 14.6 | 12.9 | 1.1 |
| **Magnetite** | 10.2 | 10.2 | 10.1 | 9.6 | 9.7 | 10.7 | 9.9 | 9.5 | 9.1 | *0.8* |
| **C₂S/C₃S** | 32.9 | 31.0 | 31.6 | 30.0 | 26.5 | 24.2 | 23.4 | 26.8 | 28.1 | 1.9 |
| **Brownmillerite** | 18.0 | 15.2 | 8.1 | 5.5 | 4.4 | 12.1 | 8.3 | 5.0 | 3.4 | *0.9* |
| **Hydroandradite / katoite** | 0.0 | 4.6 | 10.4 | 12.7 | 13.6 | 7.9 | 12.2 | 13.6 | 15.0 | *0.6* |
| **Portlandite** | 1.1 | 2.6 (1.7) | 1.4 (0.8) | 1.1 (0.4) | 1.0 (0.5) | 3.3 (2.0) | 2.5 (1.3) | 1.8 (1.1) | 1.4 (0.9) | *0.2* |
| **Lime** | 0.6 | 0.1 | 0.3 | 0.4 | 0.0 | 0.0 | 0.1 | 0.3 | 0.4 | 0.1 |
| **Calcite** | 0.0 | 0.0 | 0.0 | 0.0 | 0.2 | 0.3 | 0.5 | 0.1 | 0.0 | 0.1 |

To analyse the porosity of the steel slag pastes MIP measurements were performed. For MIP measurements, after 28 days of hydration, the samples were cut in 3 mm cubic pieces, immersed in isopropanol for 7 days and subsequently dried in a desiccator for another 7 days. The AutoPore IV 9500 Micromeritics Series Mercury Porosimeter, with the maximum pressure of 228 MPa, was used for the measurements. The surface tension of mercury (*γ_{Hg}*)was 485 N/m and a contact angle (θ) of 130° was applied. The results for samples C0, C1, C2 & C3 are given in Table 3.

**Table 3 Total porosity of the steel slag pastes after 28 days of hydration.**

| **Total porosity** | **C0** | **C1** | **C2** | **C3** |
|---|---|---|---|---|
| **[%]** | 26.8 | 16.1 | 14.5 | 9.9 |

Even though reactive phases- C₂S and C₂F are the most contaminated phases in steel slag **(Table 4),** leaching of steel slag pastes after 28 days of hydration fulfils the legislation requirements **(Table 5).** This can be explained by the incorporation of heavy metals in the hydration products **(Table 4).**

The batch leaching test was performed on BOF slag and 28-days cured slag pastes according to EN 12457-2 (one stage batch leaching test). The obtained elements concentrations were compared with the limit values specified in the Dutch Soil Quality Degree.

**Table 4 Average chemical composition of the main phases in 28 days hydrated steel slag (chemical composition of each phase in the binder (BOF slag) and of hydration products).**

| **Oxide** | **Na₂O** | **MgO** | **Al₂O₃** | **SiO₂** | **P₂O₅** | **SO₃** | **K₂O** | **CaO** | **TiO₂** | **V₂O₅** | **Cr₂O₃** | **MnO** | **Fe₂O₃** |
|---|---|---|---|---|---|---|---|---|---|---|---|---|---|
| **Phase** | | | | | | | | | | | | | |
| **Magnetite** | 0.02 | 15.86 | 0.41 | 0.90 | 0.05 | 0.00 | 0.26 | 3.28 | 0.12 | 0.15 | 0.43 | 11.52 | 66.98 |
| **Mg-wuestite** | 0.00 | **30.46** | 0.26 | 1.07 | 0.04 | 0.00 | 0.25 | 2.49 | 0.10 | 0.16 | 0.55 | 12.28 | 52.34 |
| **Mg-wuestite rim** | 0.14 | **13.51** | 1.86 | 3.96 | 0.36 | 0.05 | 1.97 | 13.21 | 0.69 | 0.49 | 0.41 | 9.26 | 54.09 |
| **Brownmillerite** | 0.04 | 0.76 | 9.48 | 2.47 | 0.10 | 0.02 | 0.22 | 42.55 | 6.36 | **1.48** | 0.45 | 1.34 | 34.74 |
| **C2S** | 0.15 | 0.48 | 0.74 | 27.08 | 3.07 | 0.15 | 0.46 | 60.83 | 1.19 | **1.17** | **1.15** | 0.19 | 3.34 |
| **Hydration products C0** | 0.23 | 3.53 | 2.65 | 18.58 | 1.96 | 0.16 | 1.31 | 45.95 | 1.75 | **1.38** | **0.47** | 2.62 | 19.38 |
| **Hydration products C1** | 0.22 | 2.88 | 3.33 | 17.21 | 1.73 | 0.17 | 5.77 | 46.341 | 1.96 | **1.31** | **0.48** | 1.82 | 16.70 |
| **Hydration products C2** | 0.34 | 2.85 | 3.97 | 16.31 | 1.59 | 0.16 | 3.14 | 47.30 | 2.16 | **1.31** | **0.48** | 1.87 | 18.49 |
| **Hydration products C3** | 0.39 | 4.08 | 4.27 | 13.54 | 1.31 | 0.16 | 6.94 | 42.21 | 2.06 | **1.16** | **0.40** | 2.39 | 21.06 |

**Table 5 Leaching of inorganic contaminants measured by one stage batch leaching test and the SQD limit values.**

| **Parameter** | **Unshaped material (SQD)** | **Steel slag** | **C0** | **C1** | **C2** | **C3** |
|---|---|---|---|---|---|---|
| | **mg/kg** | **mg/kg** | **mg/kg** | **mg/kg** | **mg/kg** | **mg/kg** |
| Antimony (Sb) | 0.32 | 0.17 | 0.16 | 0.15 | 0.17 | 0.15 |
| Arsenic (As) | 0.90 | 0.11 | 0.10 | 0.12 | 0.10 | 0.10 |
| Barium (Ba) | 22.00 | 9.60 | 2.83 | 2.56 | 2.59 | 2.32 |
| Cadmium (Cd) | 0.04 | 0.00 | 0.00 | 0.00 | 0.00 | 0.00 |
| Chromium (Cr) | 0.63 | 0.03 | 0.03 | 0.05 | 0.01 | 0.03 |
| Cobalt (Co) | 0.54 | 0.04 | 0.04 | 0.04 | 0.04 | 0.04 |
| Coper (Cu) | 0.90 | <0.02 | <0.02 | <0.02 | <0.02 | <0.02 |
| Lead (Pb) | 2.30 | <0.01 | <0.01 | <0.01 | <0.01 | <0.01 |
| Molybdenum (Mo) | 1.00 | <0.04 | <0.04 | <0.04 | <0.04 | <0.04 |
| Nickel (Ni) | 0.44 | <0.01 | <0.01 | <0.01 | <0.01 | <0.01 |
| Tin (Sn) | 0.40 | <0.01 | <0.01 | <0.01 | <0.01 | <0.01 |
| Vanadium (V) | 1.80 | 0.06 | 0.10 | 0.13 | 0.09 | 0.18 |
| Zinc (Zn) | 4.50 | 0.19 | 0.12 | 0.11 | 0.13 | 0.13 |

Table 6 shows a summary of slag mixtures and the properties of the obtained building products. The steel slag as described in table 1 was ground with a planetary ball mill (Pulverisette 5, Fritsch) and sieved or milled with a disc mill to obtain an average grain size of at most 30 µm. The steel slag was optionally premixed with an addition. The solids were subsequently mixed with an aqueous solution of the chelating agent. The slag mixture was transferred to a mould, maintained in the mould for 24 hours, demoulded and cured under ambient conditions for 28 days. All building products obtained according to the method of the invention showed excellent compressive strength and low porosity.

**Table 6 (Samples S1 and S2 are not according to the invention)**

| | Steel slag (9) | Liquid to solid ratio | Chelating agent | Dosage of chelating agent (wt.% by mass of slag) | Addition (g) | Compressive Strength (28 days) | Porosity |
|---|---|---|---|---|---|---|---|
| C0 | 100 | 0.235 | | - | - | 19 MPa | 26.8 |
| C1 | 100 | 0.16 | K₃-citrate | 1 | | 75 MPa | 16.1 |
| C2 | 100 | 0.16 | K₃-citrate | 2 | | 60 MPa | 14.5 |
| C3 | 100 | 0.16 | K₃-citrate | 3 | | 60 MPa | 9.9 |
| C4 | 100 | 0.18 | K₃-citrate | 3.5 | | 46 MPa | |
| S1 | 100 | 0.18 | Na₃-citrate | 1.1 | | 41 MPa | |
| S2 | 100 | 0.18 | Na₃-citrate | 3.2 | | 39 MPa | |
| S3 | 100 | 0.25 | K₃-citrate | 1.1 | Sand (200 g) | 30 MPa | |
| S4 | 100 | 0.25 | K₃-citrate | 3.2 | Sand (200 g) | 22 MPa | |

## Claims

1. A slag mixture for a building product comprising steel slag, water, and a chelating agent, wherein the chelating agent is potassium citrate, and wherein the chelating agent ranges between 0.01 and 9.7 wt.% by mass of steel slag, and having a liquid to solid ratio in the range of 0.10 - 0.35.

2. The slag mixture according to claim 1, wherein the chelating agent ranges between 1.0 % and 5.0 % by mass of steel slag.

3. The slag mixture according to claim 1 or 2, having a liquid to solid ratio in the range of 0.10 -0.25, more preferably 0.12 - 0.20, most preferably 0.16.

4. The slag mixture according to any of the preceding claims, wherein the steel slag comprises 10 - 30 % brownmillerite, 0 - 15 % magnetite, 25 - 60 % C₂S, 10 - 30 % Mg-Wuestite, 0 - 20 % C₃S and 0 - 6 % free-CaO by mass.

5. The slag mixture according to any of the preceding claims, wherein the steel slag comprises 35 - 60 % CaO, 10 - 17 % SiO₂, 15 - 35 % ΣFe Oxides, 1 - 5 % Al₂O₃, 1 - 13 % MgO, 0 - 4 % P₂O₅ by mass.

6. The slag mixture according to any of the preceding claims, wherein the chelating agent is tri-potassium citrate monohydrate.

7. The slag mixture according to any of the preceding claims, wherein the steel slag particle size is at most 500 µm, preferably at most 106 µm, measured as described in the description.

8. The slag mixture according to any of the preceding claims, wherein the steel slag has a median grain size of at most 30 µm, preferably at most 20 µm, more preferably at most 14 µm, measured as described in the description.

9. The slag mixture according to any of the preceding claims, further comprising additions such as sand, gravel and/or lime stone.

10. A method for preparing a building product comprising the steps of
a) providing a steel slag and,
b) optionally providing additions, such as sand, gravel and/or limestone,
c) adding an aqueous solution of the chelating agent,
d) mixing the ingredients of step a - c to obtain the slag mixture according to any of the claims 1 - 9,
e) applying the slag mixture in a mould,
f) curing the slag mixture to obtain the building product.

11. A method for preparing a building product comprising the steps of
a) Providing a steel slag,
b) Optionally providing additions, such as sand, gravel and/or limestone,
c) Providing a chelating agent,
d) Adding water,
e) Mixing the ingredients of step a - d to obtain the slag mixture according to any of the claim 1 - 9,
f) applying the slag mixture in a mould,
g) curing the slag mixture to obtain the building product.

12. The method of claim 10 or 11, wherein the slag mixture is setting in the mould, and wherein the setting time ranges between 1 - 13 hours.

13. A building product obtained from the slag mixture of any of claims 1 - 9, or by the method of any of claim 10 - 12, having a compressive strength of at least 20 MPa, preferably at least 55 MPa, after 28 days of curing.

14. The building product according to claim 13, having a mesoporous structure.

15. The building product according to claim 13 or 14, wherein the leaching properties of vanadium and chromium are within the limits of the Dutch Soil Quality Degree, with limit values, V < 1.80 mg/kg and Cr < 0.63 mg/kg, the leaching being measured according to EN 12457-2, one stage batch leaching test.

## Patentansprüche

1. Schlackengemisch für ein Bauprodukt, umfassend Stahlschlacke, Wasser und ein Chelatisierungsmittel, wobei das Chelatisierungsmittel Kaliumcitrat ist und wobei das Chelatisierungsmittel zwischen 0,01 und 9,7 Gew.-% nach Masse Stahlschlacke reicht, und ein Verhältnis von Flüssigkeit zu Feststoff in der Spanne von 0,10 - 0,35 aufweisend.

2. Schlackengemisch nach Anspruch 1, wobei das Chelatisierungsmittel zwischen 1,0 % und 5,0 % nach Masse Stahlschlacke reicht.

3. Schlackengemisch nach Anspruch 1 oder 2, ein Verhältnis von Flüssigkeit zu Feststoff in der Spanne von 0,10 - 0,25, bevorzugter 0,12 - 0,20, am meisten bevorzugt 0,16 aufweisend.

4. Schlackengemisch nach einem der vorhergehenden Ansprüche, wobei die Stahlschlacke 10 - 30 % Braunmillerit, 0 - 15 % Magnetit, 25 - 60 % C₂S, 10 - 30 % Mg-Wuestit, 0 - 20 % C₃S und 0 - 6 % freies CaO nach Masse umfasst.

5. Schlackengemisch nach einem der vorhergehenden Ansprüche, wobei die Stahlschlacke 35 - 60 % CaO, 10 - 17 % SiO₂, 15 - 35 % ΣFe-Oxide, 1 - 5 % Al₂O₃, 1 - 13 % MgO, 0 - 4 % P₂O₅ nach Masse umfasst.

6. Schlackengemisch nach einem der vorhergehenden Ansprüche, wobei das Chelatisierungsmittel Trikaliumcitratmonohydrat ist.

7. Schlackengemisch nach einem der vorhergehenden Ansprüche, wobei die Stahlschlackenpartikelgröße höchstens 500 µm, bevorzugt höchstens 106 µm, gemessen wie in der Beschreibung beschrieben, ist.

8. Schlackengemisch nach einem der vorhergehenden Ansprüche, wobei die Stahlschlacke eine mittlere Korngröße von höchstens 30 µm, bevorzugt höchstens 20 µm, bevorzugter höchstens 14 µm, gemessen wie in der Beschreibung beschrieben, aufweist.

9. Schlackengemisch nach einem der vorhergehenden Ansprüche, ferner umfassend Zusätze wie Sand, Kies und/oder Kalkstein.

10. Verfahren zur Zubereitung eines Bauprodukts, umfassend die folgenden Schritte des
a) Bereitstellens einer Stahlschlacke und
b) optionalen Bereitstellens von Zusätzen wie Sand, Kies und/oder Kalkstein,
c) Hinzufügens einer wässrigen Lösung des Chelatisierungsmittels,
d) Mischens der Inhaltsstoffe von Schritt a - c, um das Schlackengemisch nach einem der Ansprüche 1 - 9 zu erhalten,
e) Auftragens des Schlackengemischs in einer Form,
f) Aushärtens des Schlackengemischs, um das Bauprodukt zu erhalten.

11. Verfahren zur Zubereitung eines Bauprodukts, umfassend die folgenden Schritte des
a) Bereitstellens einer Stahlschlacke,
b) optionalen Bereitstellens von Zusätzen wie Sand, Kies und/oder Kalkstein,
c) Bereitstellens eines Chelatisierungsmittels,
d) Hinzufügens von Wasser,
e) Mischens der Inhaltsstoffe von Schritt a - d, um das Schlackengemisch nach einem der Ansprüche 1 - 9 zu erhalten,
f) Auftragens des Schlackengemischs in einer Form,
g) Aushärtens des Schlackengemischs, um das Bauprodukt zu erhalten.

12. Verfahren nach Anspruch 10 oder 11, wobei das Schlackengemisch in der Form abbindet und wobei die Abbindezeit zwischen 1 - 13 Stunden reicht.

13. Bauprodukt, erhalten aus dem Schlackengemisch nach einem der Ansprüche 1 - 9 oder durch das Verfahren nach einem von Anspruch 10 - 12, mit einer Druckfestigkeit von zumindest 20 MPa, bevorzugt zumindest 55 MPa, nach 28 Tagen des Aushärtens.

14. Bauprodukt nach Anspruch 13, eine mesoporöse Struktur aufweisend.

15. Bauprodukt nach Anspruch 13 oder 14, wobei die Auslaugungseigenschaften von Vanadium und Chrom innerhalb der Grenzen des niederländischen Bodenqualitätsgrades sind, mit Grenzwerten, V < 1,80 mg/kg und Cr < 0,63 mg/kg, wobei die Auslaugung gemäß EN 12457-2, einstufiger Chargenauslaugungstest, gemessen wird.

## Revendications

1. Mélange de scories pour un produit de construction comprenant des scories d'acier, de l'eau et un agent chélatant,
dans lequel l'agent chélatant est le citrate de potassium, et dans lequel l'agent chélatant se situe entre 0,01 et 9,7 % en poids en masse de scories d'acier, et ayant un rapport liquide/solide dans la plage de 0,10 à 0,35.

2. Mélange de scories selon la revendication 1, dans lequel l'agent chélatant se situe entre 1,0 % et 5,0 % en masse de scories d'acier.

3. Mélange de scories selon la revendication 1 ou 2, ayant un rapport liquide/solide dans la plage de 0,10 à 0,25, plus préférablement de 0,12 à 0,20, idéalement de 0,16.

4. Mélange de scories selon l'une quelconque des revendications précédentes, dans lequel les scories d'acier comprennent de 10 à 30 % de brownmillerite, de 0 à 15 % de magnétite, de 25 à 60 % de C₂S, de 10 à 30 % de Mg-Wuestite, de 0 à 20 % de C₃S et de 0 à 6 % de CaO libre en masse.

5. Mélange de scories selon l'une quelconque des revendications précédentes, dans lequel les scories d'acier comprennent de 35 à 60 % de CaO, de 10 à 17 % de SiO₂, de 15 à 35 % d'oxydes de ΣFe, de 1 à 5 % de Al₂O₃, de 1 à 13 % de MgO, de 0 à 4 % de P₂O₅ en masse.

6. Mélange de scories selon l'une quelconque des revendications précédentes, dans lequel l'agent chélatant est le citrate tripotassique monohydraté.

7. Mélange de scories selon l'une quelconque des revendications précédentes, dans lequel la taille des particules de scories d'acier est d'au plus 500 µm, de préférence d'au plus 106 µm, mesurée comme décrit dans la description.

8. Mélange de scories selon l'une quelconque des revendications précédentes, dans lequel les scories d'acier ont une taille de grain médiane d'au plus 30 µm, de préférence d'au plus 20 µm, plus préférablement d'au plus 14 µm, mesurée comme décrit dans la description.

9. Mélange de scories selon l'une quelconque des revendications précédentes, comprenant en outre des ajouts tels que du sable, du gravier et/ou du calcaire.

10. Procédé de préparation d'un produit de construction, comprenant les étapes de
a) fourniture de scories d'acier et,
b) éventuellement fourniture d'ajouts, tels que du sable, du gravier et/ou du calcaire,
c) ajout d'une solution aqueuse de l'agent chélatant,
d) mélange des ingrédients de l'étape a à c pour obtenir le mélange de scories selon l'une quelconque des revendications 1 à 9,
e) application du mélange de scories dans un moule,
f) durcissement du mélange de scories pour obtenir le produit de construction.

11. Procédé de préparation d'un produit de construction, comprenant les étapes de
a) fourniture de scories d'acier,
b) éventuellement fourniture d'ajouts, tels que du sable, du gravier et/ou du calcaire,
c) fourniture d'un agent chélatant,
d) ajout d'eau,
e) mélange des ingrédients de l'étape a à d pour obtenir le mélange de scories selon l'une quelconque des revendications 1 à 9,
f) application du mélange de scories dans un moule,
g) durcissement du mélange de scories pour obtenir le produit de construction.

12. Procédé selon la revendication 10 ou 11, dans lequel le mélange de scories est durci dans le moule et dans lequel le temps de durcissement est compris entre 1 et 13 heures.

13. Produit de construction obtenu à partir du mélange de scories selon l'une quelconque des revendications 1 à 9, ou par le procédé selon l'une quelconque des revendications 10 à 12, ayant une résistance à la compression d'au moins 20 MPa, de préférence d'au moins 55 MPa, après 28 jours de durcissement.

14. Produit de construction selon la revendication 13, ayant une structure mésoporeuse.

15. Produit de construction selon la revendication 13 ou 14, dans lequel les propriétés de lixiviation du vanadium et du chrome sont dans les limites du degré néerlandais de qualité du sol, avec des valeurs limites, V < 1,80 mg/kg et Cr < 0,63 mg/kg, la lixiviation étant mesurée selon la norme EN 12457-2, test de lixiviation par lots en une étape.
